# EUROPEAN PATENT SPECIFICATION

(11) **EP 0 791 288 B1**
(45) Date of publication and mention of the grant of the patent: **31.10.2001**
(21) Application number: 96309571.6
(22) Date of filing: 31.12.1996
(51) Int. Cl.: A01D 34/68

(54) **Power-driven work machine with an operating lever device**
Angetriebenes Arbeitsgerät mit einer Betätigungsvorrichtung
Appareil de travail entraîné avec un système de leviers de commande

(30) Priority: 22.02.1996 JP 3522896
(43) Date of publication of application: 27.08.1997
(73) Proprietor: HONDA GIKEN KOGYO KABUSHIKI KAISHA, Minato-ku Tokyo (JP)
(72) Inventor: Iida, Tetsuo, Wako-shi, Saitama-ken (JP); Sasaki, Hiromitsu, Wako-shi, Saitama-ken (JP)
(74) Representative: Leale, Robin George

(56) References cited:
- EP-A- 0 393 907
- DE-U- 8 813 067
- GB-A- 711 747
- GB-A- 2 127 666
- JP-A- 1 312 923
- JP-U- 63 177 118
- US-A- 4 327 539
- US-A- 4 376 240
- US-A- 4 882 897
- US-A- 5 279 101

## Description

The present invention relates generally to power-driven work machines such as mowing machines having an operating lever device, and more particularly to a device which affords enhanced operability of an operating lever in a power-driven work machine.

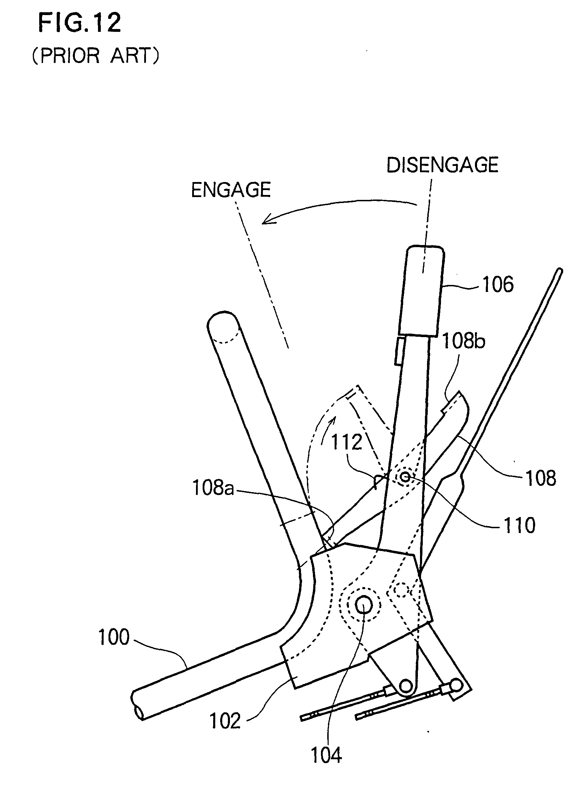

Various operating lever devices for power-driven work machines are known today, one example of which is a cutting blade clutch operating mechanism for a power-driven lawn mower disclosed in Japanese Utility Model Laid-Open Publication No. SHO 63-177118. The disclosed cutting blade clutch operating mechanism is schematically shown in Fig. 12 hereof, where a cutting blade clutch lever 106 is connected via a bracket 102 to a handle 100 of the power-driven lawn mower in such a manner that it is pivotable about an axis 104 forward and rearward (leftward and rightward in the figure) toward and away from the handle 100, and a locking arm or lever 108 is pivotably connected via an axis 110 to the cutting blade clutch lever 106.

To cause the cutting blade clutch to be engaged, the clutch lever 106 is moved about the axis 104 forward (counter-clockwise) from an upright position, as denoted by an arrow in Fig 12.

The locking lever 108 is normally biased by a spring 112 in such a direction that the front end 108a of the locking lever 108 resiliently abuts against the handle 100. With the front end 108a thus abutting against the handle 100, the clutch lever 106 is locked so as not to pivot in the forward direction.

To release the cutting blade clutch lever 106 from the locked condition, a human operator depresses the rear end 108b of the locking lever 108, so that the locking lever 108 is turned about the axis 110 in the clockwise direction. After this, the cutting blade clutch lever 106 is pushed forward to place the cutting blade clutch in the engaged position. Namely, the cutting blade clutch lever 106 can be turned to cause the cutting blade clutch to be engaged, only after the clutch lever 106 is released from locking by the locking lever 108. This means that dual operations have to be performed by the human operator in order to place the cutting blade clutch in the engaged position, although such dual operations afford an advantage of effectively avoiding an erroneous activation of the clutch.

However, the known cutting blade clutch handling mechanism has very poor operability, because the direction to operate the locking lever 18 in order to release the clutch lever 106 and the direction to operate the clutch lever 106 in order to place the clutch in the engaged position are opposite to each other and hence the dual operations must be performed with both of the human operator's hands.

GB-A-711 747 discloses a power-driven work machine having a pair of left and right handles and an operating lever device arranged to be manually actuated to operate the machine, said lever device comprising:
an operating lever, pivotably mounted on one of said left and right handles, for switching an operational condition of said work machine between active and inactive conditions; and
a locking lever, pivotably attached to said operating lever, for locking said operating lever,
and wherein the direction in which said operating lever is to be turned so as to place said work machine in the active condition and the direction in which said locking lever is to be turned so as to unlock said operating lever are the same.

GB-A-2127666 discloses a similar machine but in which the said locking lever is not pivotally attached to the said operating lever.

The present invention is characterised in that said locking lever is normally biased in a direction to lock said operating lever in a position such that said machine is in the inactive condition.

Preferably, the operating lever is also normally biased in a direction to hold the work machine in the inactive condition. With this arrangement, once the operator releases his hold of the operating lever, the operating lever is automatically restored to a predetermined position for holding the work machine in the inactive condition, and the locking lever is automatically restored to a predetermined locking position.

Furthermore, the operating lever may have a stopper for engaging and holding the biased locking lever in the predetermined locking position. Because of the provision of such a stopper, the locking lever need not have specially great rigidity, because the locking lever can be free from excessive loads that would otherwise result from the lever being caught by or unduly pressed against the handle.

In a preferred embodiment, the locking lever is pivotably connected via a pin to a bracket fixed to the operating lever. The locking by the locking lever is effected by engagement between a through-hole formed in a front end portion of the locking lever and a projection formed on the handle.

An embodiment of the present invention will now be described by way of example and with reference to the accompanying drawings, in which:
Fig. 1 is a plan view of a power-driven work machine, embodied as a mower, in which an operating lever device of the present invention is employed;
Fig. 2 is a side view of the mower shown in Fig. 1;
Fig. 3 is a view of a machine-travel operating lever device as viewed along the line 3-3 of Fig. 1;
Fig. 4 is an enlarged view, partly in section, of the cutting-blade operating lever device;
Fig. 5 is an enlarged sectional view of a locking lever of the cutting-blade operating lever device;
Fig. 6 is an enlarged plan view of the cutting-blade operating lever device as viewed in place "6" in Fig. 1;
Fig. 7 is an enlarged sectional view taken along the line 7-7 of Fig. 1;
Figs. 8A to 8C are diagrams explanatory of operation of the cutting-blade operating lever device, of which Fig. 8A shows the locking lever in a predetermined locking position, Fig. 8B shows the locking lever in an unlocking position, and Fig. 8C shows a cutting-blade operating lever in a position for activating the mower;
Figs. 9A and 9B are diagrams showing functional relation between the machine-travel operating lever device and the cutting-blade operating lever device;
Figs. 10A and 10B are diagrams showing functional relation between the machine-travel operating lever device and the cutting-blade operating lever device;
Figs. 11A and 11B are diagrams showing functional relation between the machine-travel operating lever device and the cutting-blade operating lever device; and
Fig. 12 is a fragmentary side view of a prior art power-driven lawn mower, showing relations among a handle, a cutting blade clutch lever and a locking lever of a cutting blade clutch operating device employed in the mower.

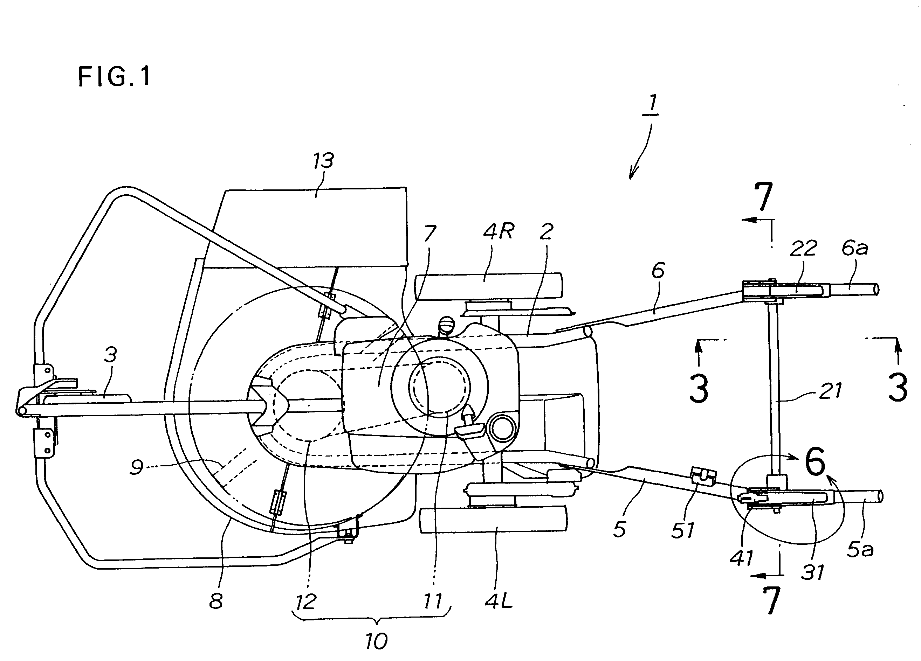

Referring to Fig. 1, a power-driven work machine 1, which is embodied as a self-propelled mower for cutting lawn or other grass, includes a front wheel (caster) 3 mounted on a front end portion of a body frame 2, left and right rear wheels 4L and 4R mounted on rear end portions of the body frame 2, and a pair of left and right rearward handles 5 and 6 extending obliquely upwardly from the body frame 2. A grip portion 5a, 6a is formed on the rear end of each of the handles 5, 6. An engine 7 is fixedly mounted on the body frame 2, and a cutter housing 8 is fixedly supported on a central portion of the body frame 2 with a grass cutting blade 9 received within the cutter housing 8. Between the engine 7 and the cutting blade 9, there is provided a transmitting unit 10 for transmitting power from the engine 7 to the cutting blade 9. The transmitting unit 10 includes a drive pulley 11 mounted on the output shaft of the engine 7 for rotation thereby and a driven pulley 12 connected to the cutting blade 9. A discharge chute 13 is attached to the cutter housing 8 to discharge grass cut by the blade 9.

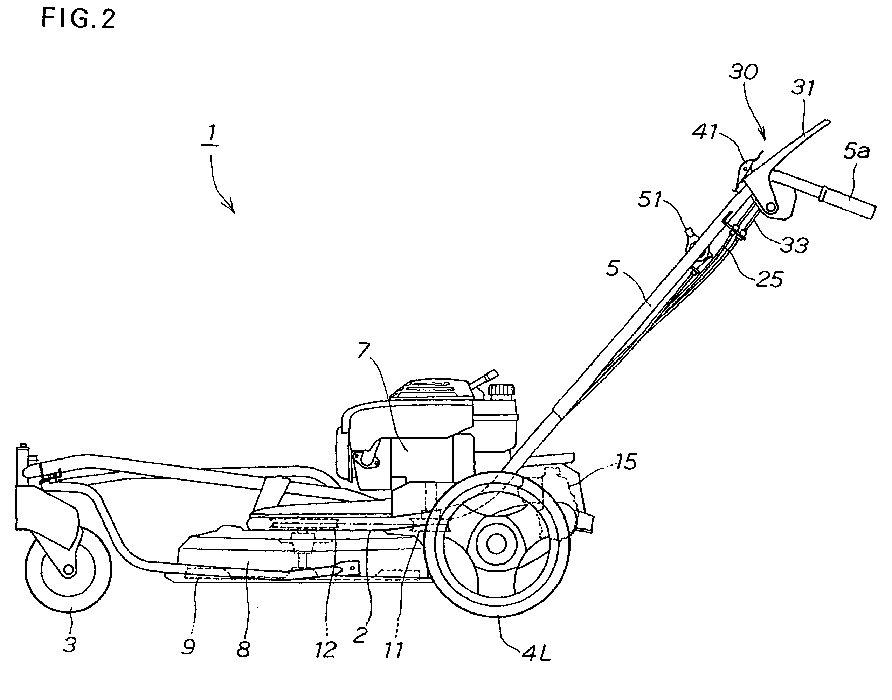

As shown in Fig. 2, the left handle 5 is provided with a cutting-blade operating lever 31, a locking lever 41 and a throttle lever 51, and these levers 31, 41 and 51 together comprise a cutting-blade operating lever device 30.

The cutting-blade operating lever 31 is used to switch an operational condition of the machine 1 between active and inactive conditions. Specifically, the cutting-blade operating lever 31 switches a cutting blade clutch (not shown) between engaged and disengaged positions, so as to activate or deactivate the cutting blade 9. In this embodiment, the cutting blade clutch is the so-called "deadman's clutch" which is designed to keep the cutting blade 9 rotating only while the wire 33 is being pulled rearward by the operating lever 31. To this end, the wire 33 is normally biased in a direction to hold the cutting blade 9 in the inactive or stationary (non-operating) condition via the clutch. Reference numeral 15 is a transmission that transmits power from the engine 7 to the left and right rear wheels 4L and 4R.

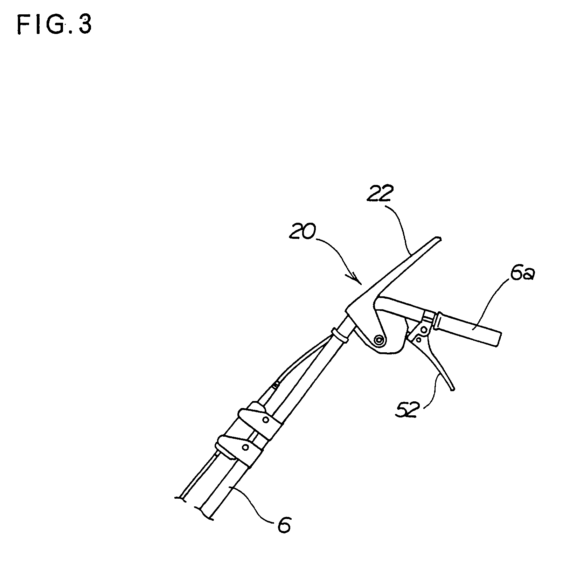

As shown in Fig. 3, the right handle 6 is provided with a machine-travel operating lever 22 and a brake lever 52, and these levers 22 and 52 comprise a machine-travel operating lever device 20. The machine-travel operating lever 22 is used to switch, via a wire 25 (see Fig. 2), a machine-travel clutch (not shown) between engaged and disengaged positions so as to activate or deactivate the left and right rear wheels 4L and 4R (Fig. 1).

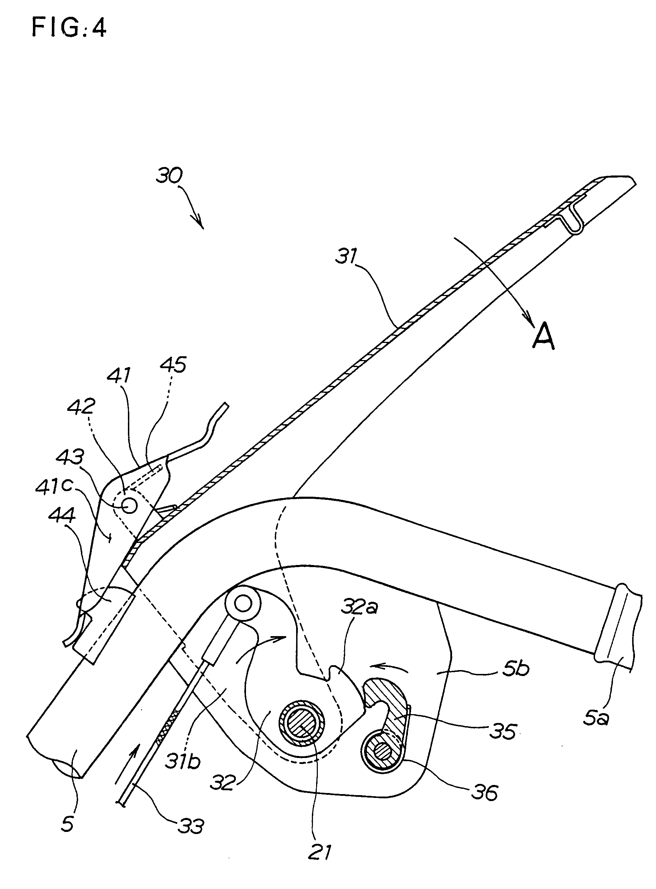

Fig. 4 is an enlarged sectional view of the cutting-blade operating lever device 30, showing relation between the operating lever 31 and cutting-blade connecting arm 32.

In the cutting-blade operating lever device 30, the left handle 5 has a bracket 5b fixed thereto near the grip portion 5a, and the cutting-blade operating lever 31 and connecting arm 32 are mounted on a rotational shaft 21 for pivotal movement by the shaft 21. The rotational shaft 21 extends through the bracket 5b, and one end of the wire 33 is connected to the connecting arm 32. By turning the cutting-blade operating lever 31, in a direction denoted by arrow A (i.e., clockwise), to a predetermined activating position over the grip portion 5a, the cutting blade 9 (Fig. 2) can be switched to the active or rotating condition via the connecting arm 32, wire 33 and cutting blade clutch.

The cutting-blade connecting arm 32 has a claw 32a which is engageable with a ratchet lever 35 rotatably mounted on the bracket 5b. The ratchet lever 35 is normally biased by a torsion spring 36 in a direction to engage the claw 32a.

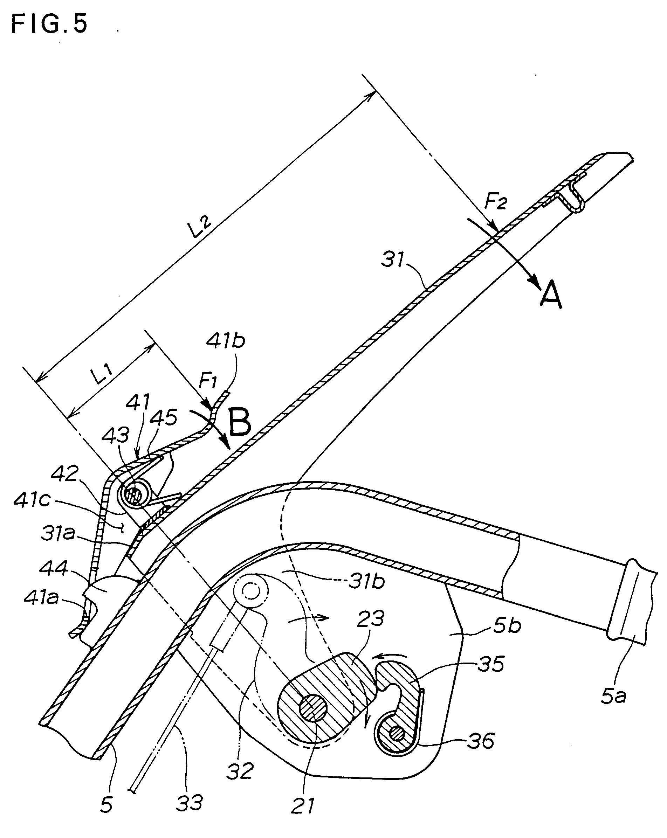

Fig. 5 is an enlarged sectional view of the locking lever 41 pivotably attached to the cutting-blade operating lever 31.

The cutting-blade operating lever 31 has an upward bracket 42 secured to its front end portion, and the locking lever 41 is pivotably attached, in the longitudinally central portion thereof, to the upward bracket 42 via a pin 43. In this embodiment, the direction A in which the cutting-blade operating lever 31 is to be turned to place the cutting blade 9 in the operating condition coincides with a direction B in which the locking lever 41 is to be turned to release the cutting-blade operating lever 31.

Specifically, the locking lever 41 is a molded member which has a dogleg shape in longitudinal section (taken along the forward/rearward direction of the mower) and also has an inverted U shape in transverse section (taken across the forward/rearward direction of the mower). The locking lever 41 has a through-hole 41a in its front end portion, a rear end portion 41b having a suitable shape for depression by a human operator, and a pair of left and right side wall portions 41c. The left handle 5 has an upward projection 44 for engagement with the through-hole 41a.

The locking lever 41 is normally biased by a torsion spring 45 in such a direction where the edge defining the through-hole 41a in the lever 41 is locked by the upward projection 44 (locking direction). The locking direction of the locking lever 41 coincides with the direction where the cutting-blade operating lever 31 is biased to hold the cutting blade 9 in the stationary condition.

The cutting-blade operating lever 31 also has a stopper 31a that engages the bottoms of the left and right side wall portions 41c of the locking lever 41 biased in the locking direction (counterclockwise), so as to hold the locking lever 41 in a predetermined locking position. Further, a cancelling cam 23 for cancelling the engagement between the claw 32a (Fig. 4) and the ratchet lever 35 is mounted on the rotational shaft 21.

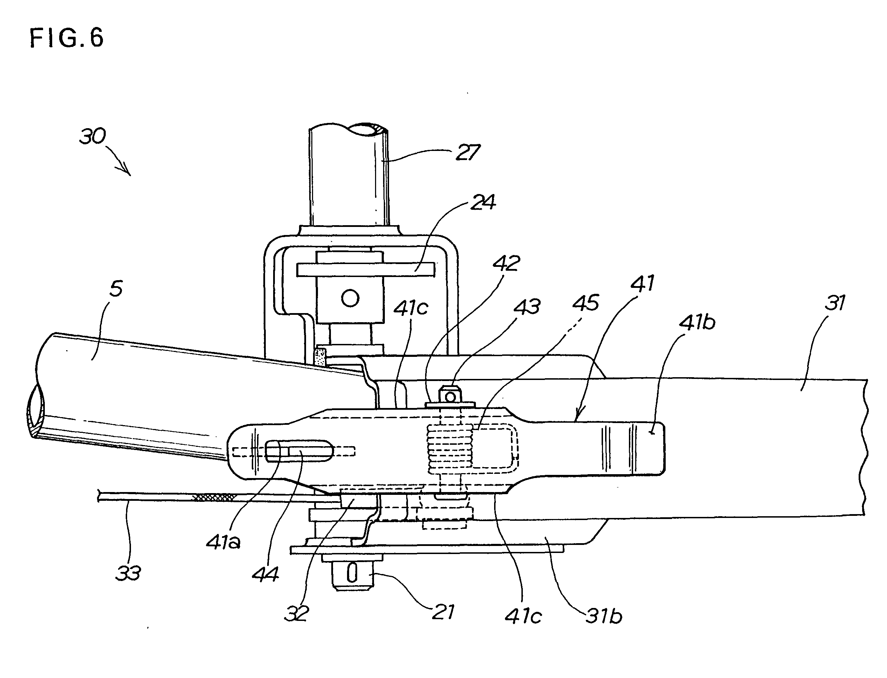

Fig. 6 is an enlarged plan view of the cutting-blade operating lever device 30, in which the cutting-blade operating lever 31 and locking lever 41 extend generally in the same direction as the left handle 5 and in which the locking lever 41 is normally biased by the torsion spring 45 in such a manner that the rear portion of the lever 41 is located higher than the front portion. The cutting-blade connecting arm 32 and wire 33 extend parallel to and near one of the longitudinal edges of the cutting-blade operating lever 31.

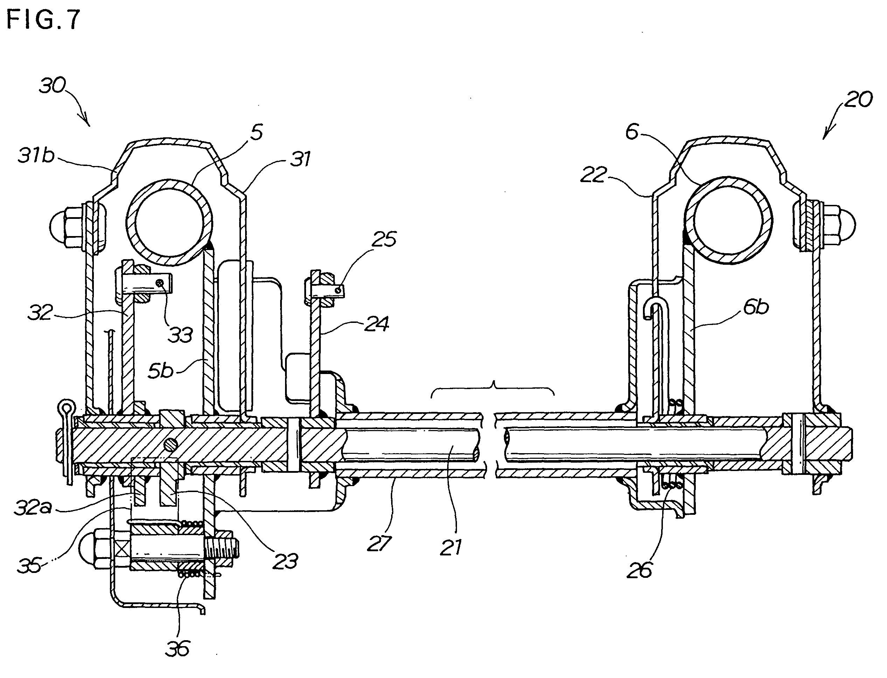

Fig. 7 is an enlarged sectional view taken along the line 7-7 of Fig. 1, which shows relation between the machine-travel operating lever device 20 and the cutting-blade operating lever device 30.

The machine-travel operating lever device 20 comprises the rotational shaft 21 rotatably passed through the brackets 5b and 6b extending downward from the left and right handles 5 and 6, the machine-travel operating lever 22 mounted on a right end portion of the shaft 21, the cancelling cam 23 mounted on a left end portion of the shaft 21, a machine-travel connecting arm 24 mounted on an intermediate portion of the rotational shaft 21, the wire 25 (Fig. 2) coupling the machine-travel connecting arm 24 with the machine-travel clutch (not shown), and a torsion spring 26 normally biasing the machine-travel operating lever 22 in a direction to keep the left and right rear wheels 4L and 4R (Fig. 1) in the inactive or stationary condition.

The cutting-blade operating lever 31 is pivotably mounted on a left end portion of the rotational shaft 21. The proximal end portion 31b of the cutting-blade operating lever 31, where the lever 31 is pivotably mounted on the rotational shaft 21, has an inverted U shape in transverse section, and the cutting-blade connecting arm 32 is mounted on the rotational shaft 21 adjacent to a left wall of the proximal end portion 31b. Reference numeral 27 represents a tubular cover enclosing the rotational shaft 21.

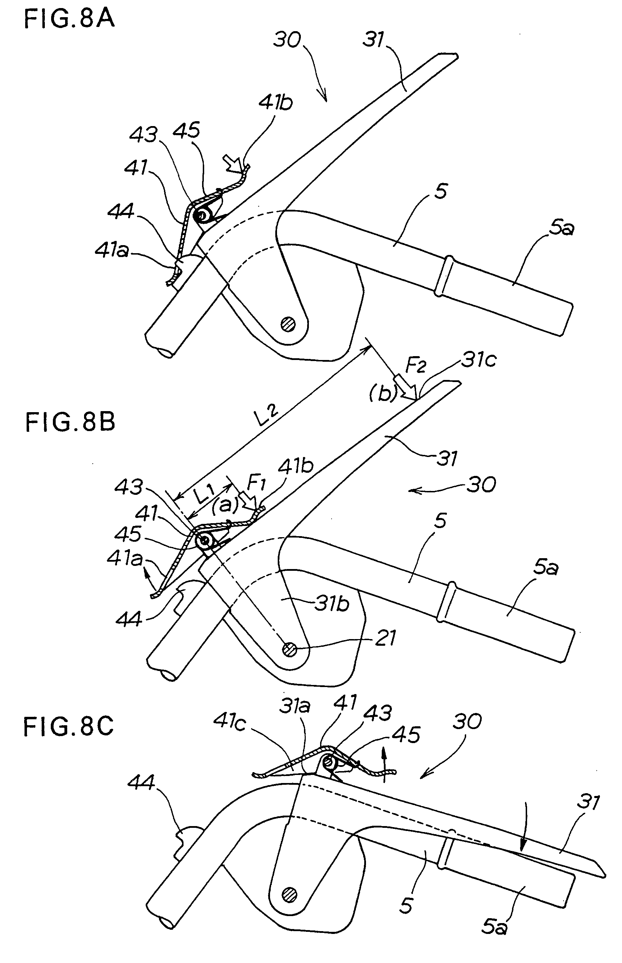

Next, operation of the cutting-blade operating lever device 30 arranged in the above-mentioned manner will be described in detail below with reference to Figs. 8A to 8C.

Fig. 8A shows the locking lever 41 locking the cutting-blade operating lever 31 against the clockwise rotation; namely, in this position, by the locking lever 41 being biased by the torsion spring 45, the edge of the through-hole 41a in the locking lever 41 is locked by the projection 44 of the left handle 5 so that the cutting-blade operating lever 31 is locked in an inoperable condition. To release or unlock the cutting-blade operating lever 31 from the inoperable condition, the rear end portion 41b is first depressed by the human operator in a direction denoted by arrow (a) to disengage the edge of the through-hole 41a from the projection 44. Then, while using the left hand thumb to further turn the locking lever 41 clockwise, the human operator, using the left hand palm, operates the cutting-blade operating lever 31 to pivot in the same direction as the locking lever 31 as denoted by arrow (b), and then firmly holds the lever 31 together with the grip portion 5a. By so doing, the cutting-blade operating lever 31 is brought down to the predetermined activating position over the grip portion 5a. In this way, the cutting-blade operating lever 31 can be moved from the inoperable condition to the activating position with the operator's single hand. Along with such a clockwise pivotal movement of the operating lever 31, the cutting-blade connecting arm 32 of Fig. 4 pivots in the clockwise direction to thereby pull the wire 33, so that the cutting-blade clutch is placed in the engaged position.

The following paragraphs more fully describe relation between operational forces to be applied to the cutting-blade operating lever 31 and the locking lever 41.

Moment M1 necessary for depressing the rear end portion 41b out of the locking engagement with the projection 44 is expressed as M1 = F1 üE L1, where F1 represents force with which the locking lever 41 is to be depressed and L1 represents a distance from the pin 43 to the rear end portion 41b.

Further, moment M2 necessary for depressing the rear end portion 31c of the cutting-blade operating lever 31 to bring the operating lever 31 down to the predetermined activating position over the grip portion 5a is expressed as M1 = F2 üE L2, where F2 represents force with which the locking lever 41 is to be depressed and L2 represents a distance from the rotational shaft 21 to the rear end portion 31c.

Thus, moment M1 necessary for depressing the rear end portion 41b out of the locking engagement with the projection 44 is much smaller than moment M2 necessary for depressing the rear end portion 31c of the cutting-blade operating lever 31 to bring the operating lever 31 down to the activating position over the grip portion 5a.

Here, consider a case where a relatively great moment, corresponding to moment M2, is applied onto the rear end portion 41b of the locking lever 41 by the human operator depressing it with relatively great force. According to the design of the embodiment, the front end portion of the work machine 1 is raised slightly above the ground, before the cutting-blade operating lever 31 is turned in the clockwise direction,(i.e., the front wheel 3 is raised using the rear wheels 4L and 4R as a fulcrum). The depressing force releases the locking lever 4, but does not allow the cutting-blade operating lever 31 to pivot. Thus, concurrent pivotal movements of the cutting-blade operating lever 31 and locking lever 41 can be reliably avoided.

As seen from the foregoing, the cutting-blade operating lever device 30 of the present invention is constructed as a so-called "two-action lever device" where the pivotal movement of the cutting-blade operating lever 31 is permitted by first depressing the rear end portion 41b of the locking lever 41 and then depressing the rear end portion 31c of the cutting-blade operating lever 31. Namely, with the lever device, the human operator can not firmly hold the cutting-blade operating lever 31 along with the grip portion 5a, before the locking lever 41 is released from the locking by the projection 44 formed on the left handle 5. Such two actions can be readily made with a relatively small force and would not apply excessive operating force to the two levers 31 and 41. At least, as long as the work machine 1 is doing normal work in a normal condition, the levers 31 and 41 would both have great rigidity against bending as well as superior durability.

Once the operator releases his hold of the locking lever 41, the lever 41 is caused to pivot counterclockwise (in the arrowed direction) by the biasing force of the torsion spring 45 as shown in Fig. 8C until the bottom of the side wall portions 41c abuts against the stopper 31a to be held thereby in the locking position. Thus, during the counterclockwise pivotal movement by the spring 45, the locking lever 41 would not be caught by or unduly pressed against the left handle 5. Because of the provision of such a stopper 31a, the locking lever 41 need not have specially great rigidity, because the locking lever 41 can be free from excessive loads that would otherwise result from the lever being caught by or unduly pressed against the handle 5.

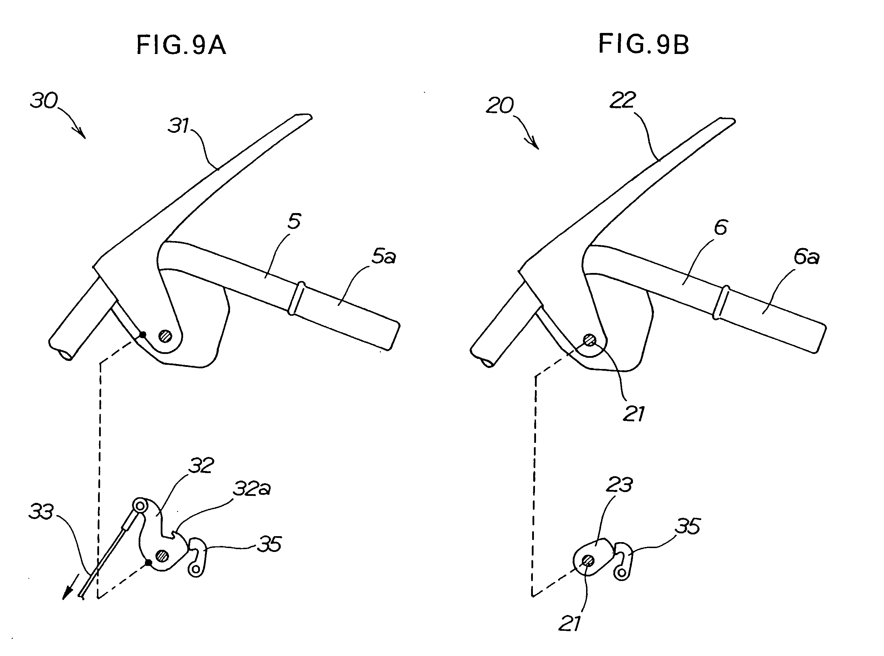

Next, a description will be made below about interrelated operation between the above-mentioned machine-travel operating lever device 20 and the cutting-blade operating lever device 30, with reference to Figs. 9 to 11. In these figures, the locking lever is not shown for convenience of illustration.

In the cutting-blade operating lever device 30 shown in Fig. 9A, the cutting-blade handling operating lever 31 is held in a non-activating position by being locked by the locking lever 41, and hence the cutting-blade connecting arm 32 operatively connected with the lever 31 is also in a non- activating position for keeping the cutting blade 9 in the inactive condition. In the machine-travel operating lever device 20 shown in Fig. 9B, the machine-travel operating lever 22 is in a non-activating position, and hence the cancelling cam 23 operatively connected with the lever 22 is also in a non-activating position for preventing the spring-biased ratchet lever 35 from pivoting in the counterclockwise direction. Thus, in such conditions, the ratchet lever 35 is held out of engagement with the claw 32 of the cutting-blade connecting arm 32.

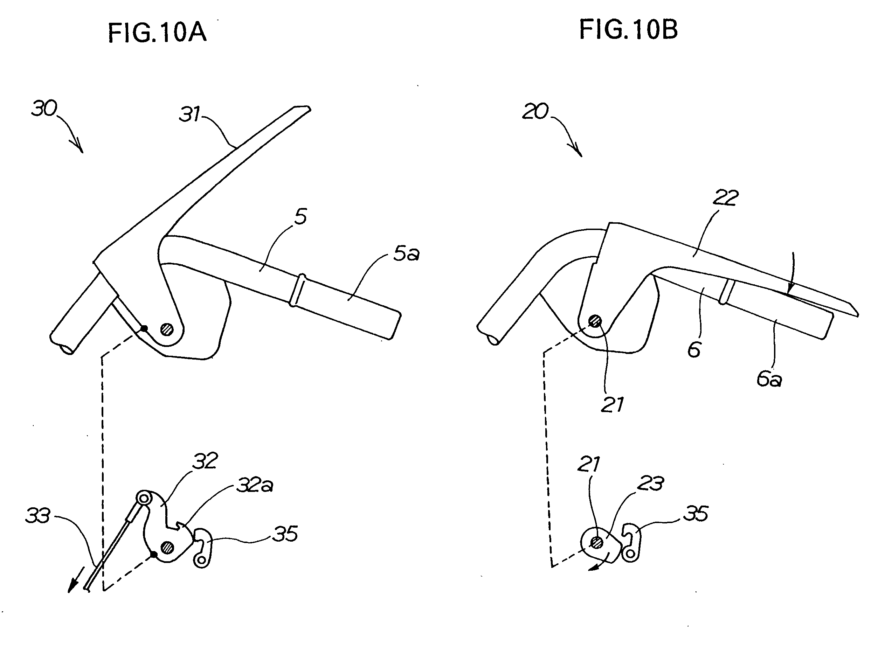

Then, once the machine-travel operating lever 22 is turned in the clockwise direction to an activating position as denoted by an arrow in Fig. 10B while the cutting-blade handling operating lever 31 is still held in the non-activating position of Fig. 9A or 10A, the cancelling cam 23 is caused to rotate with the lever 22 in the same direction via the rotational shaft 21. By such rotation of the cancelling cam 23, the ratchet lever 35 is now allowed to pivot in the counter-clockwise direction.

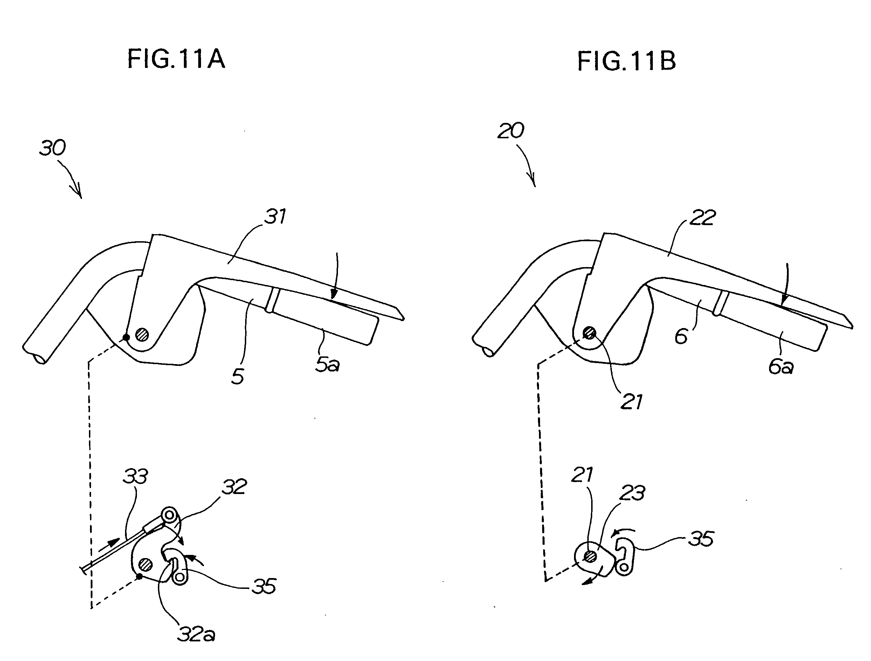

Once the cutting-blade operating lever 31 is turned in the clockwise direction as denoted by an arrow in Fig. 11A while the machine-travel operating lever 22 is still in the activating position of Fig. 10B or 11B, the cutting-blade connecting arm 32 operatively connected with the lever 31 is caused to rotate with the lever 31 in the same direction. Thus, the wire 33 is pulled to place the cutting blade 9 in the active condition via the cutting blade clutch, and the claw 32a of the connecting arm 32 is brought into engagement with the spring-biased ratchet lever 35. Therefore, the cutting-blade connecting arm 32 will remain in the activating position of Fig. 11A even if the operator releases his hold of the cutting-blade operating lever 31.

Then, once the operator releases his hold of the machine-travel operating lever 22, the lever 22 pivots in the counterclockwise direction back to the non-activating position, which causes the cancelling cam 23 to rotate with the lever 22 in the same direction. This counterclockwise rotation of the cam 23, in turn, causes the ratchet lever 35 to rotate in the clockwise direction so that the ratchet lever 35 is brought out of engagement with the claw 32a of the cutting-blade connecting arm 32. As a result, the wire 33 is pulled back downward in an arrowed direction of Fig. 9A, so that the cutting-blade connecting arm 32 and operating lever 31 are caused to pivot in the counterclockwise direction back to the original on-activating position as shown in Fig. 9A.

As seen from the foregoing description, the power-driven work machine 1 is allowed to travel only while the machine-travel operating lever 22 is in the activating position with the human operator's right hand. As long as the machine-travel operating lever 22 is held in the operated position, the cutting-blade operating lever 31, once activated, keeps rotating even if the operator releases his hold of the lever 31. The cutting blade 9 is brought back to the stationary condition once the operator stops holding the machine-travel operating lever 22 in the activating position. With such arrangements, the operator can readily cut grass while running the work machine 1.

When the machine-travel operating lever 22 is in the non- activating position, the cutting blade 9 is allowed to rotate only while the cutting-blade operating lever 31 is held in the activating position with the operator's left hand. Therefore, the operator can effect the grass cutting without running the work machine 1.

The operating lever device of the present invention should not be interpreted as limiting to the cutting-blade operating lever device as described above, but may be embodied as any other operating lever devices which require a series of the operator's actions for turning the operating lever while turning the locking lever to the unlocking position.

Further, while the cutting-blade operating lever 31 has been described above as being automatically restored to the non-activating position by releasing the wire 33 from the pulled condition, the lever 31 may be restored to the non-activating position via any other means such a torsional spring as long as the lever 31 is normally biased in the direction for holding the work machine in the inactive condition.

In the operating lever device of the present embodiment as has been described so far, the direction in which the cutting-blade operating lever, mounted on one of the handles of the work machine is to be turned so as to place the work machine in the active condition is the same as the direction in which the locking lever is to be turned so as to unlock the operating lever. With this arrangement, the operating lever can be turned with one of the operator's hands while the locking lever is unlocked with a finger of the same hand. Namely, the human operator can perform, using only one of his two hands, the operation for unlocking the locking lever and the operation for turning the operating lever to place the work machine in the active condition. As a result, the operability of the device is greatly enhanced.

Further, the locking condition of the locking lever can be visually examined without observation of the locking lever being obstructed by the operator's hand holding the operating lever.

Further, in preferred forms of the present invention, the operating lever is normally biased in such a direction to hold the work machine in the inactive condition and the locking lever is normally biased in such a direction to lock the operating lever. The direction to hold the work machine in the inactive condition and the direction to lock the operating lever are set to be the same as each other. With this arrangement, once the operator releases his hold of the operating lever, the operating lever is automatically restored to a predetermined position for holding the work machine in the inactive condition, and the locking lever is automatically restored to a predetermined locking position. This achieves even more enhanced operability.

Furthermore, the operating lever has a stopper for engaging and holding the biased locking lever in the predetermined locking position. By virtue of such a stopper, the locking lever need not have specially great rigidity, because the lever is reliably prevented from being subjected to excessive loads that would otherwise result from the lever being caught by or unduly pressed against the handle.

## Claims

1. A power-driven work machine (1) having a pair of left and right handles (5, 6) and an operating lever device arranged to be manually actuated to operate the machine, wherein said lever device comprises:
an operating lever (31), pivotably mounted on one of said left and right handles (5), for switching an operational condition of said work machine between active and inactive conditions; and
a locking lever (41), pivotably attached to said operating lever, for locking said operating lever;
and wherein the direction in which said operating lever is to be turned so as to place said work machine in the active condition and the direction in which said locking lever is to be turned so as to unlock said operating lever are the same;
**characterised in that** said locking lever is normally biased in a direction to lock said operating lever in a position such that said machine is in the inactive condition.

2. A machine as claimed in claim 1, wherein said operating lever (31) is normally biased in a direction in which said work machine (1) is in the inactive condition.

3. A machine as claimed in claim 1 or 2, wherein said operating lever (31) has a stopper (31a) for engaging said locking lever (41), biased in said direction to lock said operating lever, so as to hold said locking lever in a predetermined locking position.

4. A machine as claimed in any of claims 1 to 3, wherein said locking lever (41) is pivotably connected via a pin (43) to a bracket (42) fixed to said operating lever (31).

5. A machine as claimed in claim 4, wherein said locking lever (41) has a through-hole (41a) formed in a front end portion thereof and said one handle (5, 6) has a projection (44) for engagement with said through-hole.

6. A machine as claimed in any preceding claim, which further comprises an arm (32) operatively connected with said operating lever (31) for holding said operating lever in a predetermined position to place said work machine (1) in the active condition.

7. A machine as claimed in claim 6, wherein said arm (32) has a claw (32a), and which further comprises a ratchet lever (35) for engagement with said claw so as to hold said operating lever (31) in the predetermined position to place said work machine (1) in the active condition.

## Patentansprüche

1. Motorisch angetriebene Arbeitsmaschine (1) mit einem Paar linker und rechter Handgriffe (5, 6) und einer Bedienungshebel-Vorrichtung, welche derart angeordnet ist, dass sie manuell betätigt werden kann, um die Maschine zu bedienen, wobei die Hebelvorrichtung umfasst:
einen Bedienungshebel (31), welcher schwenkbar an einem von linkem und rechtem Handgriff (5) angebracht ist, um einen Betriebszustand der Arbeitsmaschine zwischen einem Aktivzustand und einem Inaktivzustand umzuschalten; und
einen Verriegelungshebel (41), welcher schwenkbar an dem Bedienungshebel angebracht ist, um den Bedienungshebel zu verriegeln; und wobei die Richtung, in welcher der Bedienungshebel zu drehen ist, um die Arbeitsmaschine in den Aktivzustand zu versetzen, und die Richtung, in welcher der Verriegelungshebel zu drehen ist, um den Bedienungshebel zu entriegeln, dieselben sind;
**dadurch gekennzeichnet, dass** der Verriegelungshebel im Normalfall derart in einer Richtung vorgespannt ist, dass er den Bedienungshebel in eine Stellung derart vorspannt, dass die Maschine sich in dem inaktiven Zustand befindet.

2. Maschine nach Anspruch 1, wobei der Bedienungshebel (31) im Normalfall in einer Richtung vorgespannt ist, in welcher sich die Arbeitsmaschine (1) im inaktiven Zustand befindet.

3. Maschine nach Anspruch 1 oder 2, wobei der Bedienungshebel (31) einen Anschlag (31a) zum Angreifen an dem Verriegelungshebel (41) aufweist, welcher Verriegelungshebel in der Richtung zum Verriegeln des Bedienungshebels vorgespannt ist, um den Verriegelungshebel in einer vorbestimmten Verriegelungsstellung zu halten.

4. Maschine nach einem der Ansprüche 1 bis 3, wobei der Verriegelungshebel (41) schwenkbar über einen Stift (43) mit einer an dem Bedienungshebel (31) befestigten Klammer (42) verbunden ist.

5. Maschine nach Anspruch 4, wobei der Verriegelungshebel (41) ein Durchgangsloch (41a) aufweist, welches in einem vorderen Endbereich desselben ausgebildet ist, und wobei ein Handgriff (5, 6) einen Vorsprung (44) zum Angreifen an dem Durchgangsloch aufweist.

6. Maschine nach einem der vorangehenden Ansprüche, welche ferner einen Arm (32) umfasst, der wirkungsmäßig mit dem Bedienungshebel (31) verbunden ist, um den Bedienungshebel in einer vorbestimmten Stellung zu halten, um die Arbeitsmaschine (1) in den Aktivzustand zu versetzen.

7. Maschine nach Anspruch 6, wobei der Arm (32) eine Klaue (32a) aufweist, und welche ferner einen Rasthebel (35) zum Angreifen an der Klaue umfasst, um den Bedienungshebel (31) in der vorbestimmten Stellung zu halten, um die Arbeitsmaschine (1) in den Aktivzustand zu versetzen.

## Revendications

1. Machine de travail à moteur (1) comprenant une paire de poignées gauche et droite (5, 6) et un système de leviers de commande agencé pour être actionné manuellement afin de commander la machine, ledit système de leviers comprenant :
un levier de commande (31), monté de façon à pouvoir pivoter sur une desdites poignées gauche et droite (5), pour commuter un état de fonctionnement de ladite machine de travail entre un état actif et un état inactif; et
un levier de verrouillage (41), attaché de façon à pouvoir pivoter audit levier de commande, pour verrouiller ledit levier de commande ;
le sens dans lequel ledit levier de commande doit être pivoté de façon à placer ladite machine dans l'état actif et le sens dans lequel ledit levier de verrouillage doit être pivoté de façon à déverrouiller ledit levier de commande étant les mêmes ;
**caractérisée en ce que** ledit levier de verrouillage est normalement poussé dans un sens pour verrouiller ledit levier de commande dans une position telle que ladite machine est à l'état inactif.

2. Machine selon la revendication 1, **caractérisé en ce que** ledit levier de commande (31) est normalement poussé dans un sens dans lequel ladite machine de travail (1) est à l'état inactif.

3. Machine selon la revendication 1 ou 2, **caractérisée en ce que** ledit levier de commande (31) comporte une butée (3 la) pour l'engagement dudit levier de verrouillage (41), poussé dans ledit sens pour verrouiller ledit levier de commande, de manière à maintenir ledit levier de verrouillage dans une position de verrouillage prédéterminée.

4. Machine selon l'une quelconque des revendications 1 à 3, **caractérisée en ce que** ledit levier de verrouillage (41) est raccordé de façon à pouvoir pivoter via une tige (43) à une attache (42) fixée audit levier de commande (31).

5. Machine selon la revendication 4, **caractérisée en ce que** ledit levier de verrouillage (41) comporte un trou traversant (41a) ménagé dans une portion d'extrémité avant de celui-ci et **en ce qu'**une dite poignée (5, 6) comporte une saillie (44) pour l'engagement avec ledit trou traversant.

6. Machine selon l'une quelconque des revendications précédentes, qui comprend en outre un bras (32) fonctionnellement raccordé audit levier de commande (31) pour maintenir ledit levier de commande dans une position prédéterminée pour placer ladite machine de travail (1) dans l'état actif.

7. Machine selon la revendication 6, **caractérisée en ce que** ledit bras (32) comporte une griffe (32a), et qui en outre comprend un levier à cliquet (35) pour l'engagement avec ladite griffe de manière à maintenir ledit levier de commande (31) dans la position prédéterminée pour placer ladite machine de travail (1) dans l'état actif.
